# EUROPEAN PATENT SPECIFICATION

(11) **EP 2 286 299 B1**
(45) Date of publication and mention of the grant of the patent: **14.12.2011**
(21) Application number: 09741897.4
(22) Date of filing: 08.05.2009
(51) Int. Cl.: G02C 1/02

(54) **FASTENER FOR LENSES**
LINSENFIXIERER
ORGANE DE FIXATION POUR VERRES

(30) Priority: 09.05.2008 IT VI20080105; 04.06.2008 IT VI20080132; 05.12.2008 IT VI20080048 U
(43) Date of publication of application: 23.02.2011
(73) Proprietor: Malavasi, Cristiano, 36070 Trissino (VI) (IT)
(72) Inventor: Malavasi, Cristiano, 36070 Trissino (VI) (IT)
(74) Representative: Forattini, Amelia
(86) International application number: PCT/EP2009/003289
(87) International publication number: WO 2009/135679

(56) References cited:
- FR-A- 2 715 235
- US-A- 6 024 445
- US-A1- 2003 058 402
- US-B1- 6 409 337

## Description

The present invention relates to a fastener for lenses, which is suitable both to fix lenses to frames and to mate lenses of different types.

As is known, traditionally the lenses are fastened to the frames of eyeglasses by means of small screws or bolts.

The screws are generally inserted in through holes that are formed in the lenses and are made to engage corresponding female threads formed in the frames.

The bolts are fastened by means of nuts.

A first inconvenience of the traditional fasteners regards the slowness of the assembly operations. The small size of the screws and the fragility of the lenses in fact require a great certain care during assembly.

Also, the screws require the use of deformable washers or of other tension-preventing spacers which must be interposed between the metallic components and the lenses in order to protect the lenses themselves.

Another drawback of the conventional screws is that, over time, they might loosen due to vibrations or less than perfect assembling.

Yet another drawback is that the holes provided in the frames must be threaded and such threading operation is onerous, both in terms of time and in terms of costs.

Another drawback of the conventional fasteners relates to the aspect of safety, because the screws or nuts very often protrude from the internal surface of the frame and may injure the wearer in case of accidents.

Conventional screws are also inconvenient when used in so-called "rimless" frames, such as "glasant" and "nylor" frames.

Those frames are characterized by minimal and particularly lightweight structures, which do not alter radically the features of the wearer because they are almost invisible.

In particular, glasant frames are constituted by a bridge, provided with nose pads, and by two temples with corresponding hinges.

Currently, the lenses are fastened to such structures by means of screws or pins inserted in holes or seats formed directly in the lenses.

An example of a fastener, particularly for lenses is disclosed in US6409337B1, in which the fastener comprises an elongated body that is suitable to be inserted in through holes formed in one of the members to be joined, said elongated body comprising a substantially cylindrical stem that has a first end that forms a wider head and a second end that forms a plurality of frustum-shaped members that are arranged in series; the bases of said frustum-shaped members are directed towards said wider head; said second end terminates into an extension ; the diameter of said wider head and the diameter of said bases being greater than the diameter of said stem.

In other glasses, a nylon wire is braided and tied in order to provide complicated knots joining the lens to the frame.

The assembly of rimless frames with current assembly technologies appears in fact to be excessively laborious, requiring considerable effort and particular attention. Accordingly, the assembly is time consuming and expensive from a production point of view.

The aim of the invention is to overcome the inconveniences of the prior art fasteners by providing a fastener that is durable and safe and at the same time allows an easy and quick assembly of the lens to the frame.

Within the scope of this aim, a particular object of the invention is to provide a fastener that can be installed with a simple operation and does not require the use of tools or particular fittings.

A further object of the invention is to provide a fastener that requires no threading.

A further object of the invention is to provide a fastener that allows mating different types of lenses while remaining concealed from sight.

A further object of the invention is to provide a fastener that ensures the safety of the wearer even in case of accidents.

A further object of the invention is to provide a fastener that is advantageous from a purely economic standpoint.

A further object of the invention is to provide a fastener that minimizes the probability of lens breakage.

A further object of the invention is to provide a fastener that could be replaced easily in case of breakage.

A further object of the invention is to provide a fastener that is at the same time safe and almost invisible after assembly.

This aim, these objects and others that will become better apparent hereinafter are achieved by a fastener, particularly for lenses according to claim 1.

Further characteristics and advantages will become better apparent from the description of preferred but not exclusive embodiments of an fastener according to the invention, illustrated by way of non-limiting example in the accompanying drawings, wherein
Figure 1 is a perspective view of a fastener according to the invention;
Figure 2 is a side view of the fastener of the preceding figure;
Figure 3 is a partially sectional side view of an example of application of the fastener according to the invention;
Figure 4 is a partially sectional plan view of the example of application of the preceding figure;
Figure 5 is a perspective view of a further embodiment of the fastener according to the invention;
Figure 6 is a side view of the fastener of the preceding figure;
Figure 7 is a partially sectional side view of an example of application of the fastener shown in Figures 5 and 6;
Figure 8 is a partially sectional plan view of the example of application of the preceding figure;
Figure 9 is a perspective view of a further embodiment of the fastener, according to the invention;
Figure 10 is a side view of the fastener of the preceding figure;
Figure 11 is a partially sectional side view of an example of application of the fastener shown in Figures 9 and 10;
Figure 12 is a partially sectional plan view of the example of application of the preceding figure;
Figure 13 is a perspective view of a further embodiment of the fastener according to the invention;
Figure 14 is a side view of the fastener of the preceding figure;
Figure 15 is a partially sectional side view of an example of application of the fastener shown in Figures 13 and 14;
Figure 16 is a partially sectional plan view of the example of application of the preceding figure;
Figure 17 is a perspective view of a further embodiment of the fastener according to the invention;
Figure 18 is a side view of the fastener of the preceding figure;
Figure 19 is a partially sectional side view of an example ot application of the fastener shown in Figures 17 and 18;
Figure 20 is another partially sectional side view of the example of application of the fastener shown in Figures 17 and 18;
Figure 21 is a perspective view of a further embodiment of the fastener according to the invention;
Figure 22 is a side view of the fastener of the preceding figure;
Figure 23 is a side view of the fastener according to the invention in an example of application;
Figure 24 is another side view of the fastener of the preceding figure;
Figure 25 is another side view of the fastener of the preceding figure;
Figure 26 is a side view of the fastener according to the invention in a further example of application;
Figure 27 is another side view of the fastener of the preceding figure;
Figure 28 is another side view of the fastener of the preceding figure;
Figure 29 is a perspective view of a fastener according to the invention;
Figure 30 is a side view of a further embodiment of the fastener according to the invention;
Figure 31 is a side view of the fastener of the preceding figure in an example of application;
Figure 32 is a plan view of the fastener of the preceding figure;
Figure 33 is a side view of the fastener according to the invention in a further example of application;
Figure 34 is another side view of the fastener of the preceding figure;
Figure 35 is a side view of the fastener according to the invention in a further example of application;
Figure 36 is another side view of the fastener of the preceding figure.

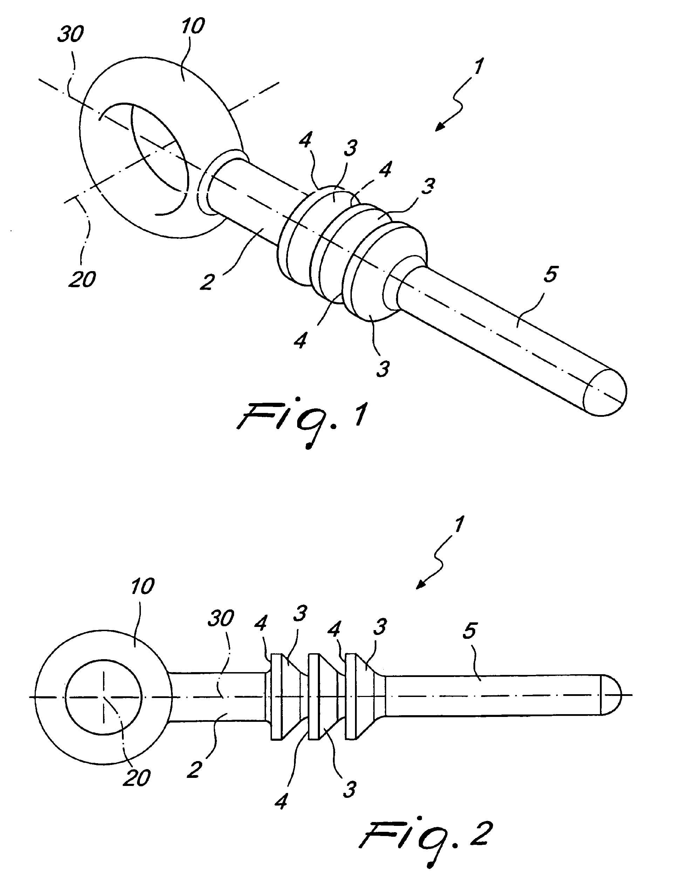

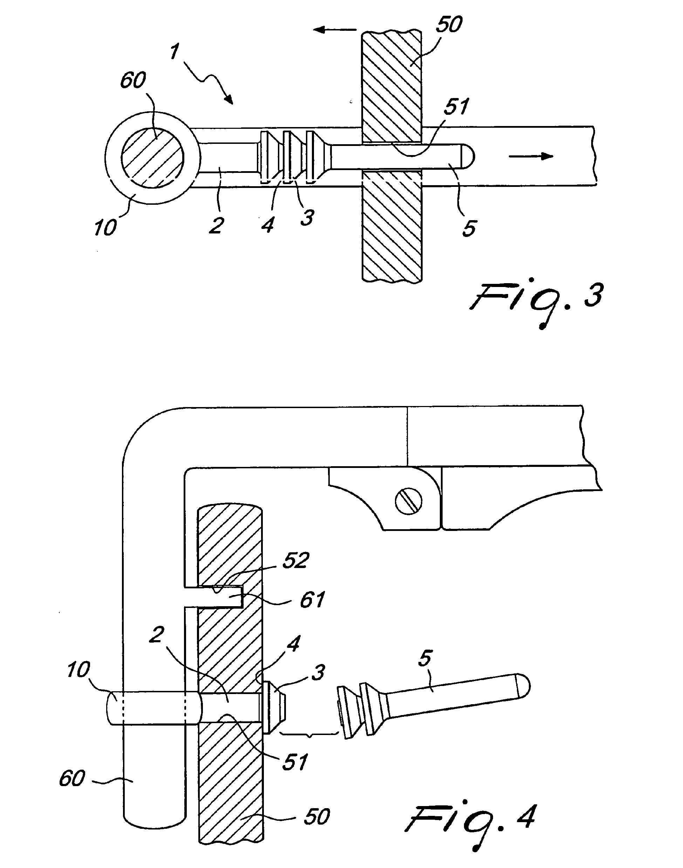

With reference to the cited Figures 1 to 4, a fastener, particularly for lenses, is globally designated by the reference numeral 1.

The fastener 1 comprises an elastically deformable elongated body, which is obtained monolithically by injection moulding. In particular, the fastener is made of polyurethane resins that can be coloured and are substantially transparent and make it difficult to perceive after application.

The elongated body has a cross-sectional profile which is substantially circular or polygonal, and is designed to be inserted in a through hole 51 that is formed in a first member 50 to be joined to a second member 60.

In the specific case, the first member 50 is constituted generally by a corrective or filtering lens, while the second member 60 is a frame portion.

The elongated body includes a substantially cylindrical stem 2, which has a first end at which a first plurality of frustum-shaped members 3 that end with a first extension 5 are provided.

The frustum-shaped members 3 are substantially mutually identical and are arranged in series, with their bases 4 oriented in the same direction. The bases have a larger diameter than the stem 2, which is instead smaller than, or equal to, the diameter of the through hole 51.

The compressibility of the frustum-shaped members 3, combined with the extendibility of the stem 2, which tend to resume their original shape and dimensions when stresses cease, allow to insert the fastener 1 within the through hole 51 and to lock the first member 50 by applying thereto a slight compression.

The fastener 1 comprises a head formed at a second end of the stem 2 that lies opposite the end from which the frustum-shaped members 3 protrude.

The distance between the head and at least one of the bases 4 is slightly shorter than the thickness of the first member 50.

The head comprises an elastically deformable ring 10, which has a round or oval shape.

The ring 10 is integral with the stem 2 and its central axis 20 is transverse with respect to the longitudinal axis 30 of the stem 2.

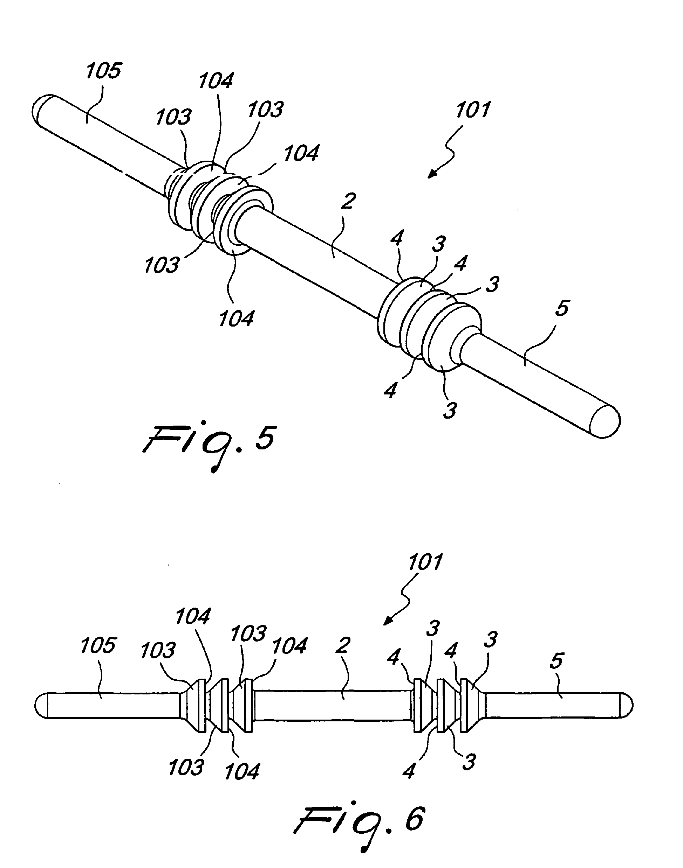

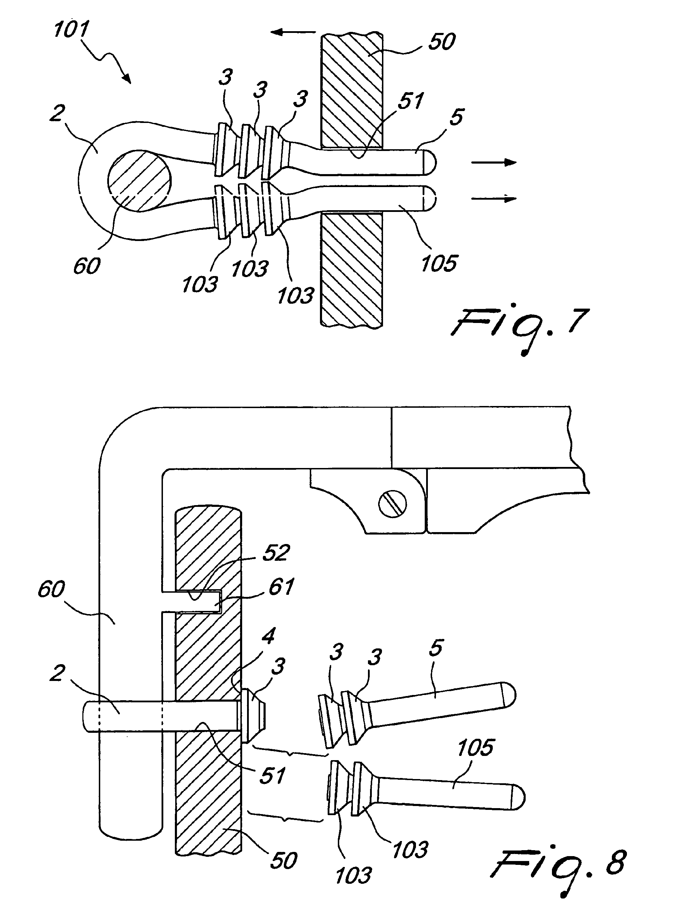

In the embodiment shown in figures 5 to 8, wherein the fastener has been globally designated by the reference numeral 101, the head is constituted by a second plurality of frustum-shaped members 103 that lie opposite the frustum-shaped members 3 and end with a second extension 105.

The frustum-shaped members 103 are substantially mutually identical and are arranged in series with the bases 104 oriented in the same direction. The bases have a diameter that is larger than the diameter of the stem 2.

As an alternative, the frustum-shaped members 103 might be orientated with the same orientation as the frustum-shaped members 3.

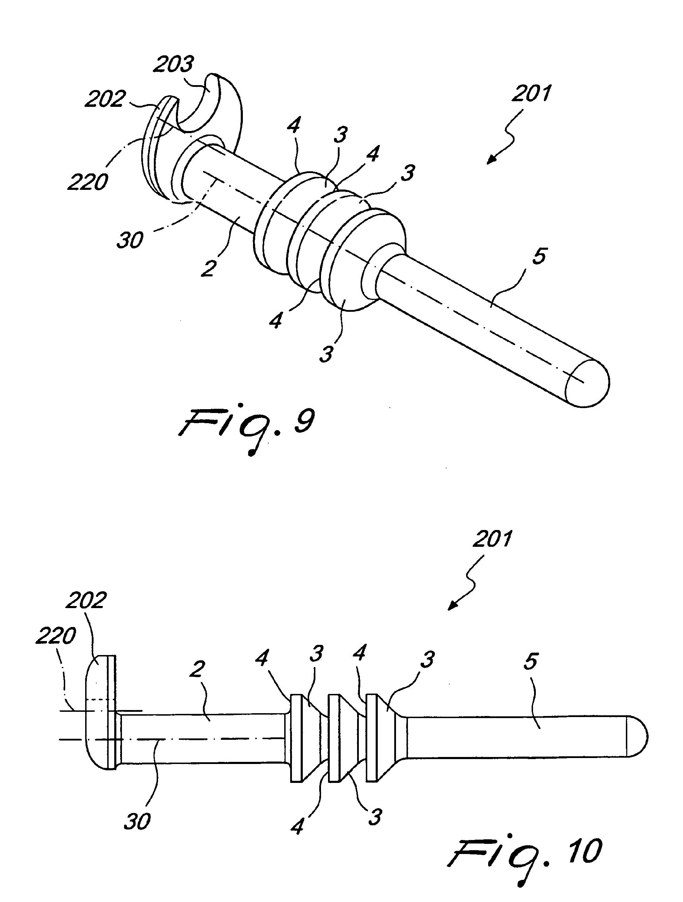

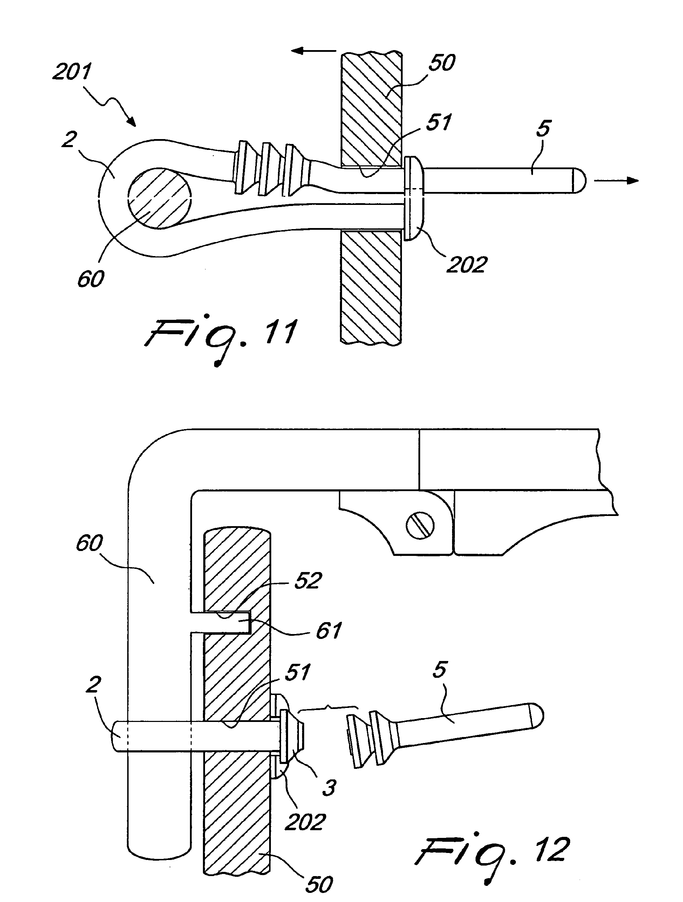

In another embodiment of the fastener according to the invention, shown in figures 9 to 12, and globally designated by the reference numeral 201, the head is constituted by a disk member 202, which is connected to the stem 2 so that its central axis 220 is parallel to, but does not coincide with, the longitudinal axis 30 of the stem 2.

A contoured portion 203 is provided on the disk member 202 and has a profile that is substantially complementary with respect to the profile of the transverse cross-section of the stem 2.

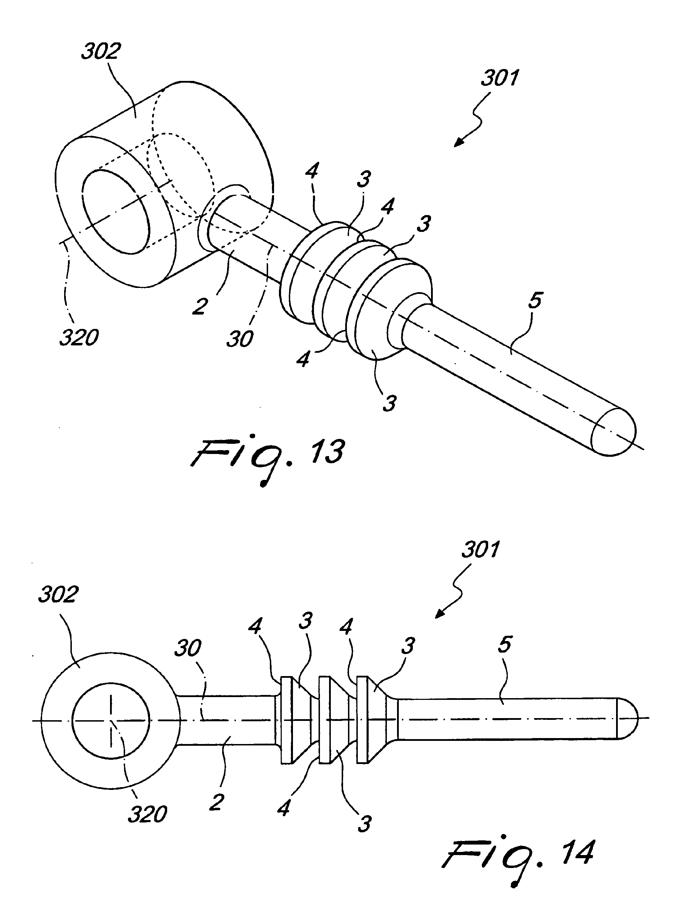

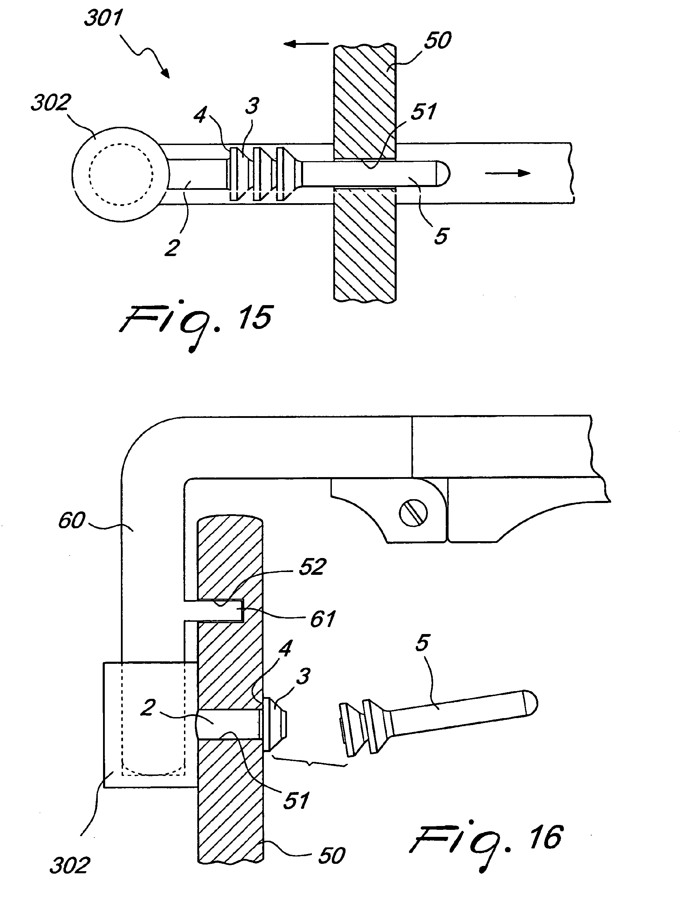

According to a further embodiment, shown in figures 13 to 16, the fastener 301 has a head constituted by a cap 302 which is elastically deformable and has a substantially cylindrical shape.

The hood 302 is integral with the stem 2 and its longitudinal axis 320 is transverse with respect to the longitudinal axis 30 of the stem 2.

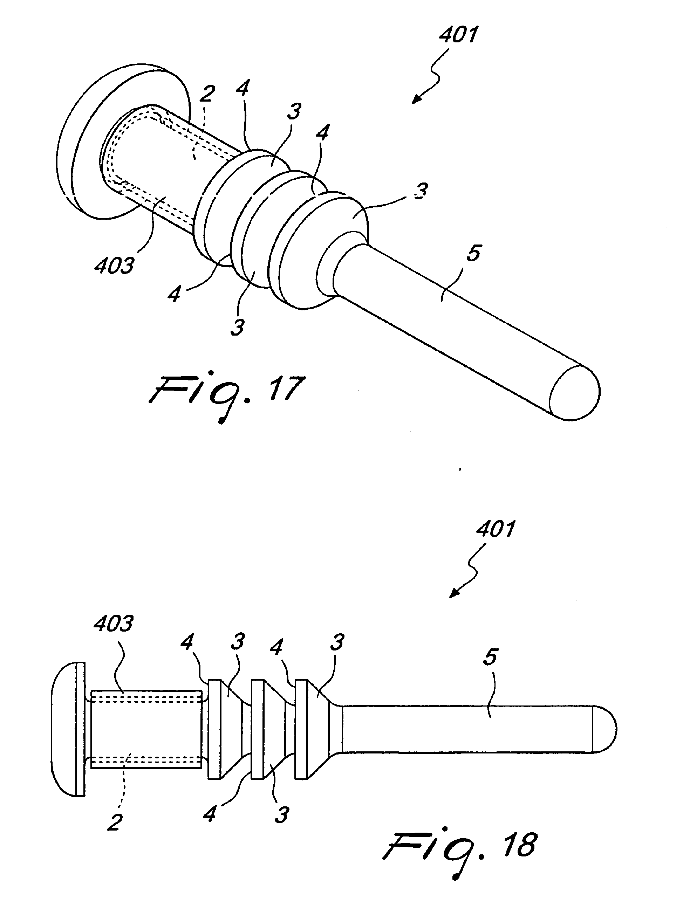

According to a further embodiment, shown in figures 17 to 20, the fastener 401 has a stem 2 that is at least partially covered by a substantially rigid jacket 403, which is preferably constituted by a metal bush.

This prerogative allows inserting the fastener 401 between the members 70 and 80 of a hinge, using it as a pivot.

In the embodiments shown in figures 5 to 20, the parts that corresponds to the parts that have already been described, with reference to the embodiment shown in figures 1 to 4, have been designated by the same reference numerals.

The operation of the fastener according to the invention is as follows.

After providing the through hole 51 and at least one notch 52 on the first member 50, i.e. on the lens, the second member 60, which corresponds to the end portion of a temple or bridge, is inserted in the ring 10, which adapts elastically.

The first extension 5 is then inserted in the through hole 51, and then traction is applied to the fastener 1.

The stress forces the frustum-shaped members 3 to enter the through hole 51, compressing elastically, and induces them to pass through the entire thickness of the first member 50, making them emerge from the opposite side.

When the pivot 61 is interlocked perfectly in the notch 52, and the second member 60 abuts against the first member 50, causing a slight elastic elongation of the stem 2, the traction ceases.

The stem 2 therefore tends to at least partially resume its original dimensions and causes the base 4 of one of the frustum-shaped members 3 to abut against the first member 50.

The two members to be connected are consequently locked by the ring 10 and by the frustum-shaped member 3 that it is located, with respect to the first one, at a distance that is slightly shorter than the thickness of the first member 50.

However, the elasticity of the stem 2 allows, in case of accidental stresses, to protect the integrity of the first member 50 and of the second member 60.

The frustum-shaped member 3 that abuts against the first member 50 might be the one closest to the ring 10 or one that is closer to the extension 5.

The excess portion of the fastener 1, constituted only by the extension 5 or also by some frustum-shaped members 3, is finally removed.

The frustum-shaped members 3 have the prerogative of being safe against injury, and therefore even if one of them protrudes from the first member 50 this does not compromise the safety of the wearer, even in case of accidental impact.

If the ring 10 is replaced by the cap 302, the use of the fastener 301 substantially corresponds to what has already been described.

Vice versa, if the head is the one of the second series of frustum-shaped members 103, the fastener 101 is substantially bent into a U-shaped arrangement, so as to form a slot that accommodates the second member 60.

The first extension 5 and the second extension 105 are then inserted in the through hole 51, and then traction is applied to the fastener 101.

The stress forces the frustum-shaped members 3 and 103 to enter the through hole 51, compressing elastically, and induces them to pass through the entire thickness of the first member 50, making them emerge from the opposite side.

The subsequent operations substantially correspond to the ones that have already been described.

If the head is constituted by the disk member 202, the first extension 5 is inserted in the through hole 51, so that the disk member 202 abuts against a face of the first member 50.

The stem 2 is substantially bent into a U-shaped arrangement, so as to form a slot that accommodates the second member 60 on the face of the first member 50 that lies opposite the one on which the disk member 202 rests, and then the first extension 5 is reinserted in the through hole 51 and in the contoured portion 203.

Traction is then applied to the fastener 201, forcing the frustum-shaped members 3 to enter the through hole 51, compressing elastically, and inducing them to pass through the entire thickness of the first member 50, making them emerge from the face on which the disk member 202 rests.

The subsequent operations substantially correspond to the ones already described.

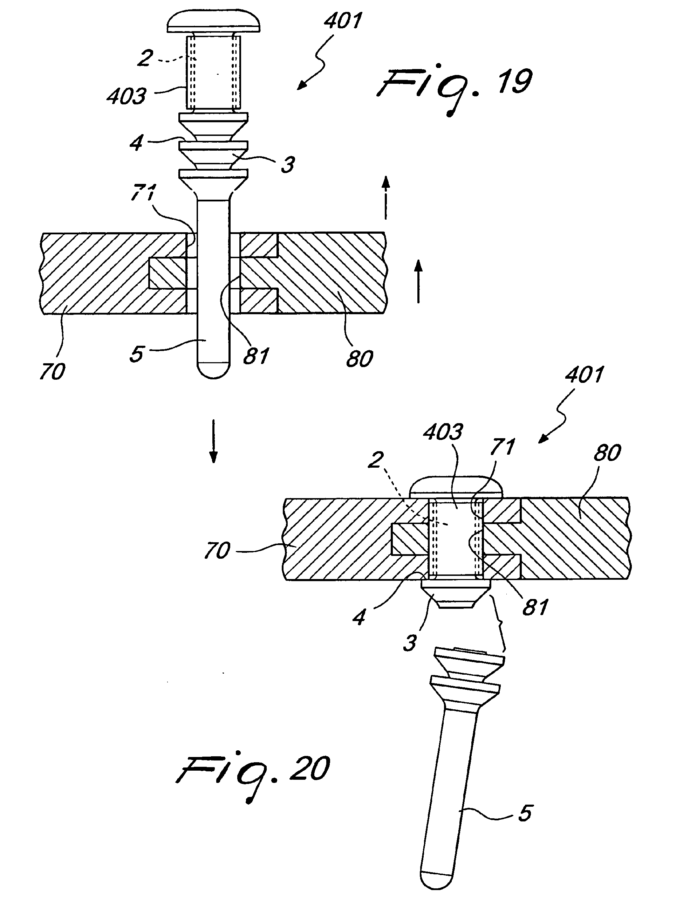

In a different possible application, shown in figures 19 and 20, the fastener 401 is used as a pivot in a hinge.

The first extension 5 is inserted in the through holes 71 and 81, formed respectively in the members 70 and 80 of the hinge, and then traction is applied to the fastener 401.

The stress forces the frustum-shaped members 3 to enter the through holes 71 and 81, compressing elastically, and induces them to pass through the entire thickness of the hinge.

When the jacket 403 is inserted perfectly in the through holes 71 and 81 and the head of the fastener 401 abuts against a first side of the member 70, traction ceases.

The stem 2 then tends to retract elastically, and moves the base 4 of one of the frustum-shaped members 3 into abutment against the second side of the member 70.

The excess portion of the fastener 1 is finally removed.

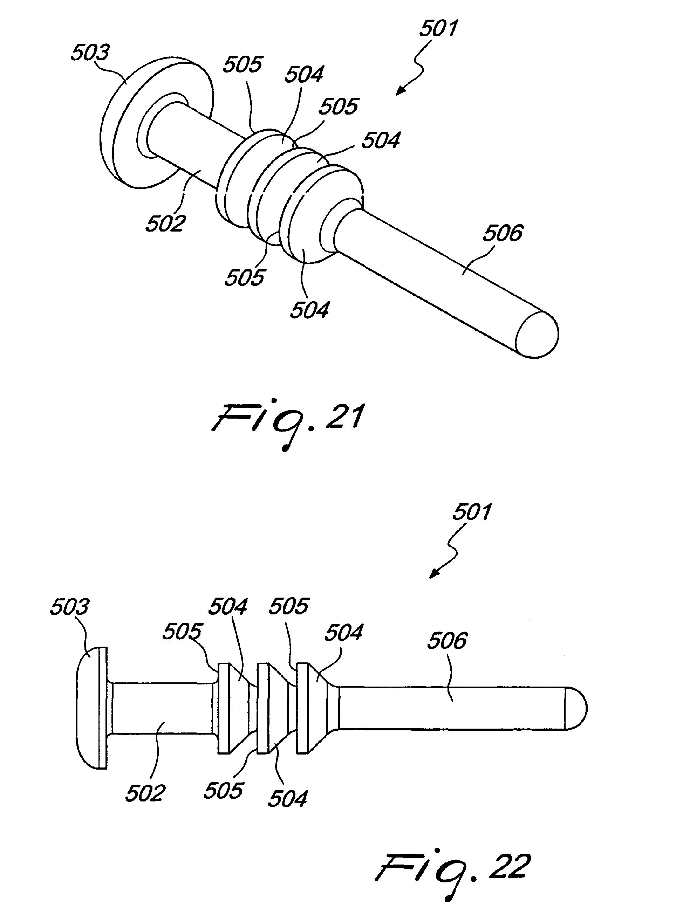

With reference to figures 21 to 28, a fastener particularly for lenses is generally designated by the reference numeral 501.

According to the invention, the fastener 501 comprises an elastically deformable elongated body, which is provided monolithically, preferably by injection moulding of suitable polyurethane resins.

The elongated body is designed to be inserted within a first through hole 551 and a second through hole 561, which are not threaded and are provided respectively in a first member 550 and in a second member 560 to be joined. These members can be constituted for example by corrective lenses, filtering lenses, or frame portions.

The elongated body includes a stem 502, which is substantially cylindrical and has a first end that is blended with a wider head 503 and a second end at which there is a plurality of frustum-shaped members 504 which end with an extension 506.

The frustum-shaped members 504 are elastically compressible and therefore have the prerogative of being safe against injury. They are substantially mutually identical and are arranged in series with the larger end faces 505 directed toward the wider head 503.

The distance between the wider head 503 and at least one of the bases 505 substantially corresponds to the thickness that is the result of the juxtaposition of the first member 550 and the second member 560.

The diameter of the wider head 503 and the diameter of the bases 505 are both greater than the diameter of the stem 502, which corresponds substantially to the diameter of the two through holes 551 and 561.

These features, together with the extendibility of the stem 502 and the compressibility of the frustum-shaped members 504, which when the stresses cease tend to resume their original shape, allow to insert the fastener 501 within the through holes 551 and 561 and to lock the first member 550 and the second member 560 between the wider head 503 and at least one of the frustum-shaped members 504.

The polyurethane resins can be coloured and are substantially transparent. This allow to make the fastener 501 concealed from sight after application.

The expanded head 503 is shaped so as to allow providing logos or particular indications on its exposed face.

The operation of the device according to the invention is as follows.

The first member 550 is juxtaposed on the second member 560, so that the first through hole 51 is substantially coaxial to the second through hole 561.

The extension 506 is then inserted within the through holes 551 and 561 and then traction is applied to the fastener 501.

The stress forces the frustum-shaped members 504 to enter the through holes 551 and 561, compressing elastically, and induces pass through the entire thickness of the first member 550 and of the second member 560, making them emerge from the latter.

When the wider head 503 abuts against the first member 550, causing a slight elastic elongation of the stem 502, the traction ceases.

The stem 502 therefore tends to resume at least partially its original dimensions and moves the base 505 of one of the frustum-shaped members 504 into abutment against the second member 560.

The two members to be joined are consequently locked between the wider head 503 and the frustum-shaped member 504 that is located, with respect to the head, at a distance that is substantially equal to the thickness of the first member 550 and of the second member 560.

However, the elasticity of the stem 502 still allows a minimal freedom of motion to the members to be joined. This characteristic, in case of accidental stresses, allows safeguarding the integrity of the first member 550 and of the second member 560.

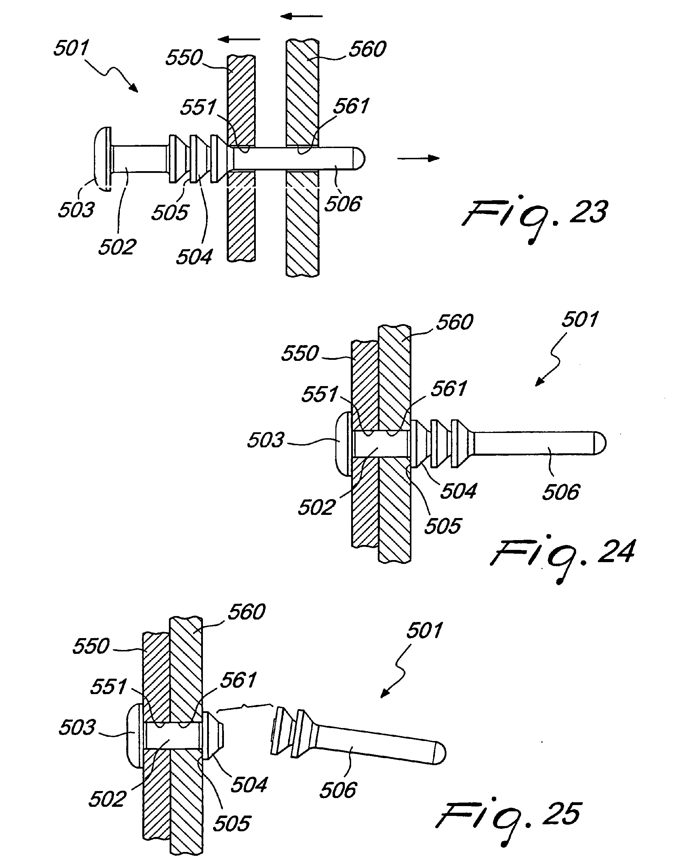

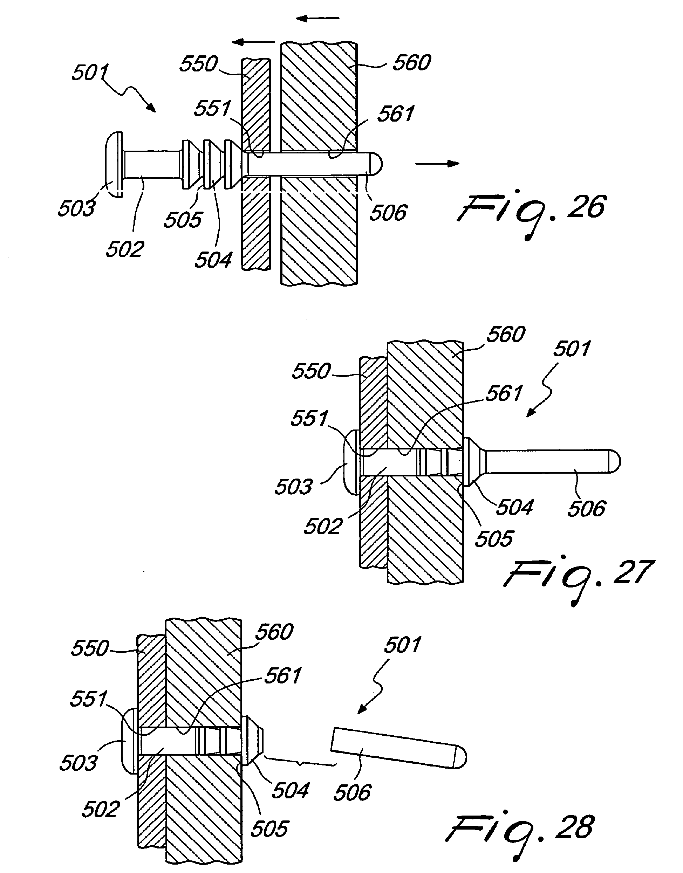

The frustum-shaped member 504 that abuts against the second member 560 might be the one closest to the wider head 503, as shown in figures 23 to 25, or one that lies closer to the extension 506, as shown in figures 26 to 28.

Finally, the excess portion of the fastener 501, constituted only by the extension 506 or also by some frustum-shaped members 504, is removed.

The frustum-shaped members 504 have the prerogative of being safe against injury, and therefore, even if one of them protrudes from the second member 560, this does not compromise the safety of the wearer.

By way of example, the first member 550 might be constituted by a filtering or corrective lens, while the second member 560 might be constituted by the portion of a frame.

In a different possibility of application, the first member 550 is constituted by a filtering lens, while the second member 560 is a corrective lens, or vice versa.

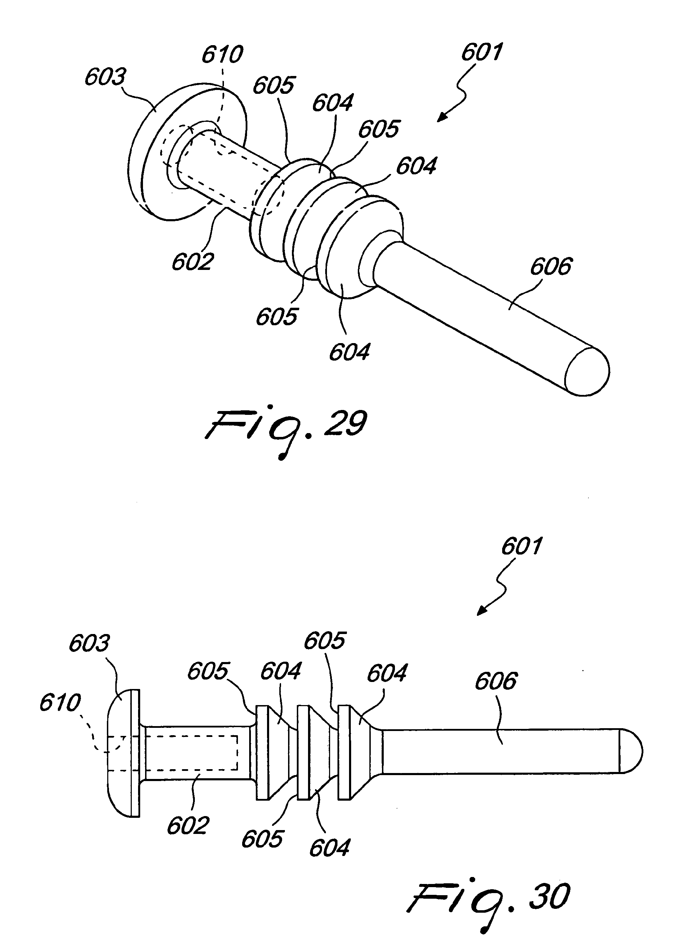

With reference to figures 29 to 36, a fastener according to the invention is globally designated by the reference numeral 601.

The fastener 601 comprises an elastically deformable slender body, which can be inserted within non-threaded through holes 651, 671 and 681, which are provided respectively in lenses 650 or in portions of frames such as for example the members 670 and 680.

The slender body has a monolithic structure, preferably made of polyurethane resin, and is constituted by a substantially cylindrical stem 602 whose diameter corresponds substantially to the diameter of the through holes 651, 671 and 681.

A disk head 603 is provided at a first end of the stem 602 and has a diameter that is greater than, or equal to, the diameter of the stem 602.

Frustum-shaped members 604 are provided at a second end of the stem 602, which lies opposite the preceding one. The frustum-shaped members 604 are arranged in series and are terminated by an extension 606. They are substantially mutually identical and are oriented so that the bases 605 are directed toward the head 603.

The frustum-shaped members 604 are elastically compressible and the diameter of their bases 605 is greater than the diameter of the stem 602.

The stem 602 and the frustum-shaped members 604 tend to resume their original shape and dimensions, when the stresses that deformed them ceases, and therefore the fastener 601 may be inserted into the through holes 651, 671 and 681 and to couple it to the supports in which the holes are provided.

The fastener 601 may be coupled to the second member to be fixed, taking advantage of the action of the head 603 and of a frustum-shaped member 604.

According to the invention, the fastener 601 comprises a receptacle 610 that is formed longitudinally on the slender body and is designed to accommodate a coupling member that has an elongated shape.

The coupling member can be constituted by a pin 661 or 701 or by a screw 690, and the receptacle 610 is constituted by a substantially cylindrical cavity that opens on the head 603 and has such a depth as to affect the stem 602 and optionally also the frustum-shaped members 604.

The pivot 661 or 701 is provided with a plurality of claw-shaped protrusions 662 or 702, which facilitate its penetration within the receptacle 610 and contrast its exit.

In the case of the screw 690, it is instead the thread that facilitates penetration and ensures retention.

The fastener according to the invention can be used as described hereinafter.

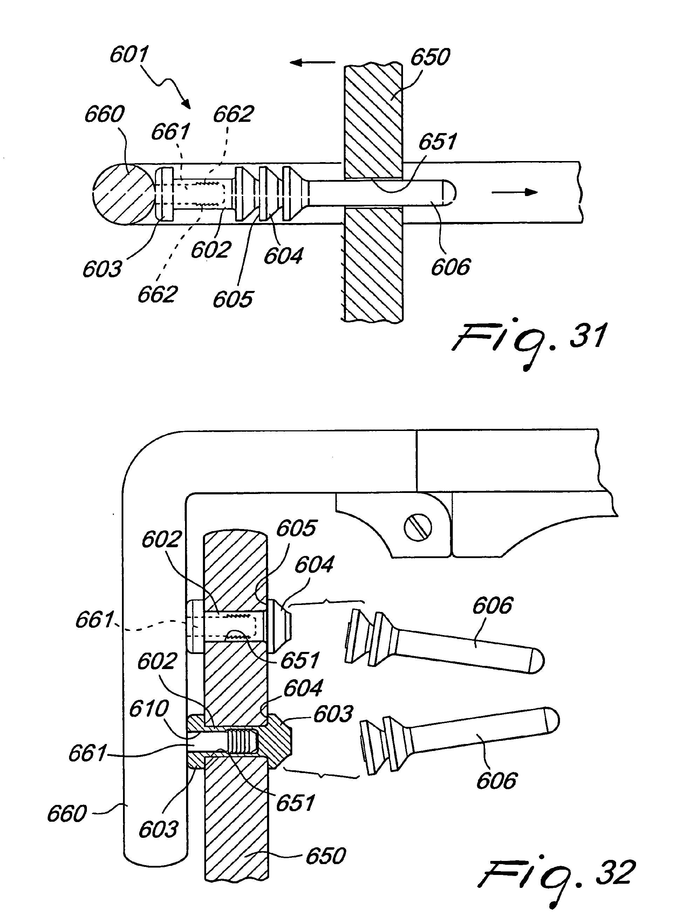

As shown in figures 31 and 32, the fastener 601 is first coupled to a first member to be fastened, which is constituted generally by a portion of a spectacles frame 660.

This operation is completed by inserting the pin 661 in the receptacle 610, so that the claw-shaped protrusions 661 grip the internal surface of the latter.

Subsequently, after inserting the extension 606 within the through hole 651 formed in a second member to be fastened, constituted for example by the lens 650, traction is applied to the fastener 601.

The stress produces a deformation that allows the frustum-shaped members 604 to pass through the second member to be fastened and simultaneously allows the pin 661 to enter the through hole 651 together with the stem 602.

When the head 603 abuts against the second member to be fastened and at least one of the frustum-shaped members 604 emerges from the through hole 651, the traction ceases.

If the head 603 has the same diameter as the stem 602, the traction is interrupted when the first member to be fastened directly abuts against the second member to be fastened.

After undergoing an elastic elongation, the stem 602 tends to resume its original dimensions and also moves the base 605 of the frustum-shaped member 604 closer to the second member to be fastened and in abutment thereon.

The fastener 601, previously coupled to the first member to be fastened, is then also coupled to the second member to be fastened by means of the head 603 and a frustum-shaped member 604.

The installation is concluded by removing the excess portion of the fastener 601, which is constituted by the extension 606 alone or also by some frustum-shaped members 604.

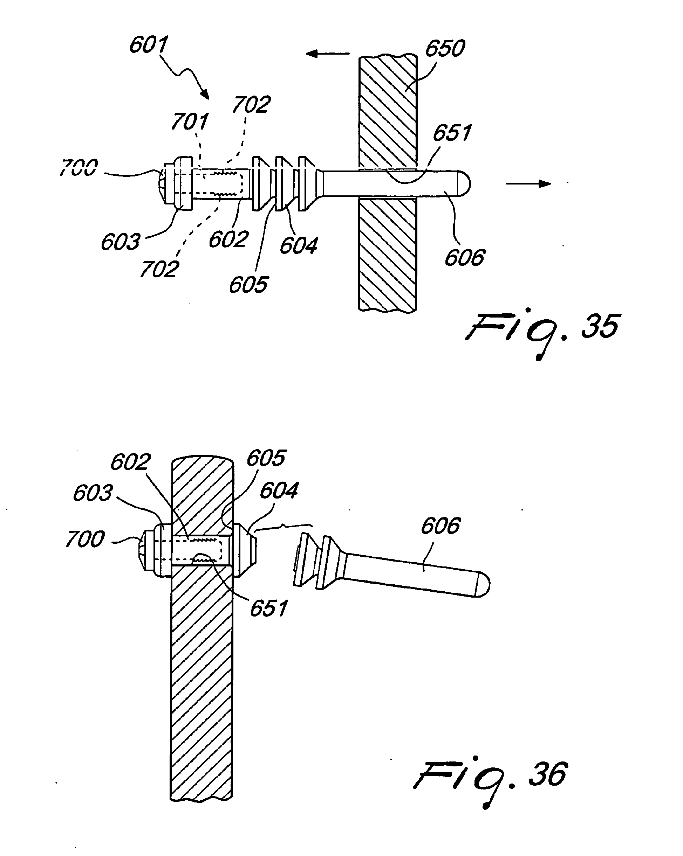

As shown in figures 35 and 36, in which the fastener 601 is used substantially as already described, the first member to be fastened is constituted by the portion of a frame 660 and also by a decoration 700 that is provided with a pin 701 equipped with claw-shaped protrusions 702.

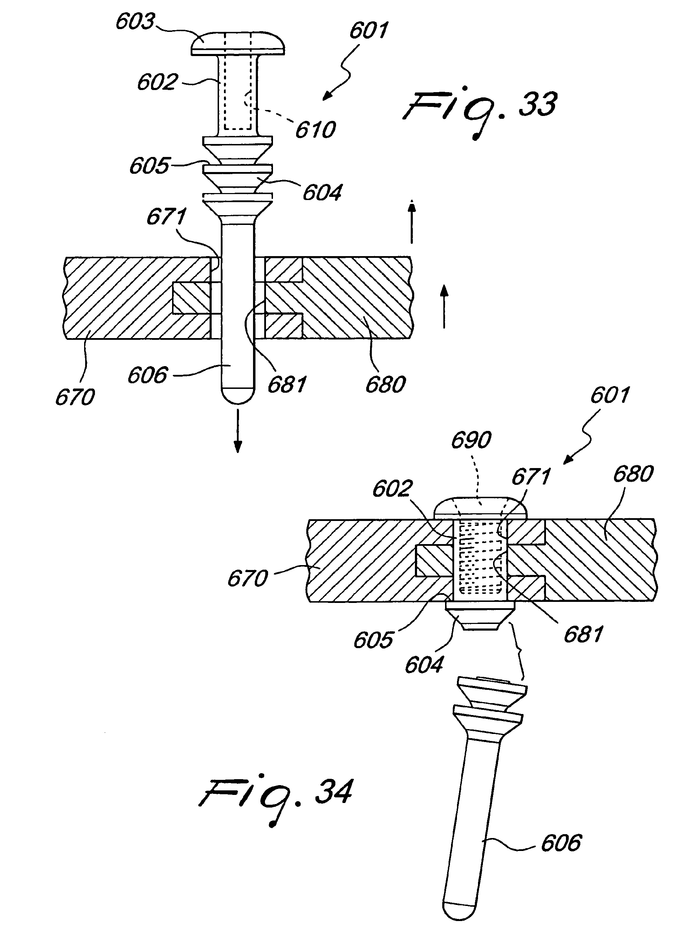

In a further implementation, shown in figures 33 and 34, the fastener 601 can be used as the pivot of a hinge that is formed by two members 670 and 680, provided respectively with through holes 671 and 681.

In this case, the extension 606 is in fact inserted in the through holes 671 and 681 and then traction is applied to the fastener 601.

The stress forces the insertion of the frustum-shaped members 604 in the through holes 671 and 681 and induces them to pass through the entire thickness of the hinge.

When the stem 602 is inserted perfectly in the through holes 671 and 681 and the head 603 abuts against a first side of the member 670, the traction is stopped.

The stem 602 then tends to retract elastically and moves the base 605 of a frustum-shaped member 604 into abutment against the second side of the member 670.

Also in this case, the installation is concluded by removing the excess portion of the fastener 601.

If the articulation between the two members 670 and 680 is excessively loose, a screw 690 can be inserted in the receptacle 610 so as to expand the stem 602 and compress it slightly within the through holes 671 and 681.

If instead the articulation is found to be excessively movable, it is possible to insert a substantially rigid pin in the receptacle 610 so as to give the stem 602 greater non-deformability.

In practice it has been found that the fastener, particularly for lenses, according to the invention, fully achieves the intended aim, since it allows simplifying the mounting of lenses on frames that use coupling members with an elongated shape for fixing.

The fastener according to the invention can be installed without using particular tools and without providing any threads.

Also, the fastener according to the invention, after installation, is concealed from sight.

In practice it has been found that the fastener according to the invention, fully achieves the intended aim, since it allows performing precise, safe and fast assemblies, minimising the probability of lens breakage.

Also, the fastener according to the invention can be easily replaced in case of breakage and is substantially invisible after assembly.

In practice, the materials used, so long as they are compatible with the specific use, as well as the contingent shapes and dimensions, may be any according to the requirements and the state of the art.

## Claims

1. A fastener, particularly for lenses, comprising an elongated body, that is suitable to be inserted in through holes formed in one of the members to be joined, said elongated body comprising a substantially cylindrical stem (2) that has a first end that forms a wider head, and a second end that forms a plurality of frustum-shaped members (3) that are arranged in series; the bases of said frustum-shaped members are directed towards said wider head; said second end terminates into an extension (5); the diameter of said wider head and the diameter of said bases being greater than the diameter of said stem **characterized in that** the elongated body is elastically deformable.

2. The fastener according to claim 1, **characterized in that** said head comprises at least one elastically deformable ring (10), the central axis of said ring being transverse with respect to the longitudinal axis of said stem.

3. The fastener according to claim 1, **characterized in that** said head comprises a second plurality of frustum-shaped members (103) that are arranged in series and end with a second extension (105), the bases of said frustum-shaped members being oriented in the same direction and having a larger diameter than said stem.

4. The fastener according to claim 1, **characterized in that** said head comprises a disk member (202) provided with a contoured portion whose profile is substantially complementary to the profile of the transverse cross-section of said stem, the central axis of said disk member being substantially parallel to the longitudinal axis of said stem.

5. The fastener according to claim 1, **characterized in that** said head comprises an elastically deformable cap (302) that has a substantially cylindrical shape, the longitudinal axis of said cap being transverse with respect to the longitudinal axis of said stem.

6. The fastener according to claim 1, **characterized in that** said stem comprises a substantially rigid jacket (403), the diameter of said jacket substantially corresponding to the diameter of said through holes.

7. The fastener according to one or more of the preceding claims, **characterized in that** the diameter of said stem substantially corresponds to the diameter of said through holes.

8. The fastener according to one or more of the preceding claims, **characterized in that** said through holes are not threaded.

9. The fastener according to one or more of the preceding claims, **characterized in that** the distance between said head and at least one of the bases of said first plurality of frustum-shaped members is slightly shorter than the thickness of said members to be connected.

10. The fastener according to one or more of the preceding claims, **characterized in that** said elongated body is formed monolithically by injection-moulding polyurethane resins.

11. The fastener according to one or more of the preceding claims, **characterized in that** said elongated body is made of substantially transparent material.

12. The fastener according to claim 1, **characterized in that** the distance between said wider head and at least one of said bases corresponds substantially to the sum of the thicknesses of said members to be joined.

13. The fastener according to one or more of the preceding claims, **characterized in that** the exposed face of said wider head allows the provision of indications, figures, logos and any sign or ornament.

14. The fastener according to claim 1, **characterized in that** it comprises a receptacle (610) that is formed longitudinally on said slender body, said receptacle being suitable to accommodate a coupling member with an elongated shape that extends from a first member to be fixed; said receptacle comprises a substantially cylindrical cavity that opens onto said head, said substantially cylindrical cavity having a shape that is substantially complementary to the shape of said coupling member and such a depth as to affect said stem and at least partly said frustum-shaped members;

15. The fastener according to claim 14, **characterized in that** the diameter of said stem substantially corresponds to the diameter of at least one through hole that is not threaded and is formed in said second member to be fastened; the diameter of said head is greater than, or equal to, the diameter of said stem.

## Patentansprüche

1. Ein Fixierer, besonders für Linsen, der einen lang gestreckten Körper umfasst, welcher geeignet ist, in durchgehende Löcher eingesetzt zu werden, die in einem der zu verbindenden Glieder geformt sind, wobei der lang gestreckte Körper einen im Wesentlichen zylindrischen Stiel (2) umfasst, der ein erstes Ende hat, welches einen breiteren Kopf bildet, und ein zweites Ende hat, welches eine Vielzahl kegelstumpfförmiger Glieder (3) bildet, die in Reihe angeordnet sind, wobei die Basen der kegelstumpfförmigen Glieder zu dem breiteren Kopf hin gerichtet sind; wobei das zweite Ende in einer Verlängerung (5) endet; wobei der Durchmesser des breiteren Kopfs und der Durchmesser der Basen größer sind als der Durchmesser des Stiels, dadurch gekenntzeichnet, dass der lang gestreckte Körper elastisch verformbar ist.

2. Der Fixierer gemäß Anspruch 1, **dadurch gekennzeichnet, dass** der Kopf mindestens einen elastisch verformbaren Ring (10) umfasst, wobei die mittlere Achse des Rings transversal zur Längsachse des Stiels ist.

3. Der Fixierer gemäß Anspruch 1, **dadurch gekennzeichnet, dass** der Kopf eine zweite Vielzahl kegelstumpfförmiger Glieder (103) umfasst, die in Reihe angeordnet sind und in einer zweiten Verlängerung (105) enden, wobei die Basen der kegelstumpfförmigen Glieder in derselben Richtung ausgerichtet sind und einen größeren Durchmesser haben als der Stiel.

4. Der Fixierer gemäß Anspruch 1, **dadurch gekennzeichnet, dass** der Kopf ein Scheibenglied (202) umfasst, das mit einem konturierten Abschnitt versehen ist, dessen Profil im Wesentlichen komplementär ist zu dem Profil des transversalen Querschnitts des Stiels, wobei die mittlere Achse des Scheibenglieds im Wesentlichen parallel zur Längsachse des Stiels ist.

5. Der Fixierer gemäß Anspruch 1, **dadurch gekennzeichnet, dass** der Kopf eine elastisch verformbare Kappe (302) umfasst, die eine im Wesentlichen zylindrische Form hat, wobei die Längsachse der Kappe transversal zur Längsachse des Stiels ist.

6. Der Fixierer gemäß Anspruch 1, **dadurch gekennzeichnet, dass** der Stiel einen im Wesentlichen starren Mantel (403) umfasst, wobei der Durchmesser des Mantels im Wesentlichen dem Durchmesser der durchgehenden Löcher entspricht.

7. Der Fixierer gemäß einem oder mehreren der obigen Ansprüche, **dadurch gekennzeichnet, dass** der Durchmesser des Stiels im Wesentlichen dem Durchmesser der durchgehenden Löcher entspricht.

8. Der Fixierer gemäß einem oder mehreren der obigen Ansprüche, dadurch gekenntzeichnet, dass die durchgehenden Löcher kein Gewinde haben.

9. Der Fixierer gemäß einem oder mehreren der obigen Ansprüche, **dadurch gekennzeichnet, dass** der Abstand zwischen dem Kopf und mindestens einer der Basen der ersten Vielzahl kegelstumpfförmiger Glieder etwas kürzer ist als die Dicke der zu verbindenden Glieder.

10. Der Fixierer gemäß einem oder mehreren der obigen Ansprüche, **dadurch gekennzeichnet, dass** der lang gestreckte Körper monolithisch durch Spritzgießen von Polyurethanharzen geformt wird.

11. Der Fixierer gemäß einem oder mehreren der obigen Ansprüche, **dadurch gekennzeichnet, dass** der lang gestreckte Körper aus im Wesentlichen transparentem Material hergestellt ist.

12. Der Fixierer gemäß Anspruch 1, **dadurch gekennzeichnet, dass** der Abstand zwischen dem breiteren Kopf und mindestens einer der Basen im Wesentlichen der Summe der Dicken der zu verbindenden Glieder entspricht.

13. Der Fixierer gemäß einem oder mehreren der obigen Ansprüche, **dadurch gekennzeichnet, dass** die exponierte Fläche des breiteren Kopfs die Bereitstellung von Anzeigen, Abbildungen, Logos und jedem beliebigen Zeichen oder Ornament ermöglicht.

14. Der Fixierer gemäß Anspruch 1, **dadurch gekennzeichnet, dass** er eine Aufnahmevorrichtung (610) umfasst, die in Längsrichtung an dem schlanken Körper geformt ist, wobei die Aufnahmevorrichturig geeignet ist, ein Kopplungsglied mit einer lang gestreckten Form aufzunehmen, das sich von einem ersten zu befestigenden Glied erstreckt; wobei die Aufnahmevorrichtung einen im Wesentlichen zylindrischen Hohlraum umfasst, der sich zu dem Kopf hin öffnet, wobei der im Wesentlichen zylindrische Hohlraum eine Form hat, die im Wesentlichen komplementär zur Form des Kopplungsglieds ist, und eine solche Tiefe hat, dass er den Stiel und zumindest teilweise die kegelstumpfförmigen Glieder betrifft.

15. Der Fixierer gemäß Anspruch 14, **dadurch gekennzeichnet, dass** der Durchmesser des Stiels im Wesentlichen dem Durchmesser mindestens eines durchgehenden Lochs entspricht, das klein Gewinde hat und in dem zweiten zu befestigenden Glied geformt ist; wobei der Durchmesser des Kopfs gröl3er als der oder gleich dem Durchmesser des Stiels ist.

## Revendications

1. Organe de fixation, en particulier pour verres optiques, comprenant un corps allongé, convenant pour être inséré dans des trous traversants formés dans l'un des organes à relier, ledit corps allongé comprenant une tige (2) sensiblement cylindrique, ayant une première extrémité formant une tête plus large, et une deuxième extrémité formant une pluralité d'organes à forme tronconique (3), agencés en série; les bases desdits organes à forme tronconique étant orientées vers ladite tête plus large; ladite deuxième extrémité s'achevant en une extension (5); le diamètre de ladite tête plus large et le diamètre desdites bases étant plus grands que le diamètre de ladite tige, **caractérisé en ce que** le corps allongé est déformable élastiquement.

2. Organe de fixation selon la revendication 1, **caractérisé en ce que** ladite tête comprend au moins un anneau (10) déformable élastiquement, l'axe central dudit anneau étant transversal à l'axe longitudinal de ladite tige.

3. Organe de fixation selon la revendication 1, **caractérisé en ce que** ladite tête comprend une deuxième pluralité d'organes (103) à forme tronconique, agencés en série et s'achevant par une deuxième extension (105), les bases desdits organes à forme tronconique étant orientées dans la même direction et ayant un plus grand diamètre que ladite tige.

4. Organe de fixation selon la revendication 1, **caractérisé en ce que** la dite tête comprend un organe discoïde (202) muni d'une portion profilée, dont le profil est sensiblement complémentaire au profil de la section transversale de ladite tige, l'axe central dudit organe discoïde étant sensiblement parallèle à l'axe longitudinal de ladite tige.

5. Organe de fixation selon la revendication 1, **caractérisé en ce que** ladite tête comprend un chapeau (302) déformable élastiquement, ayant une forme sensiblement cylindrique, l'axe longitudinal dudit chapeau étant transversal à l'axe longitudinal de ladite tige.

6. Organe de fixation selon la revendication 1, **caractérisé en ce que** ladite tige comprend une chemise (403) sensiblement rigide, le diamètre de ladite chemise correspondant sensiblement au diamètre desdits trous traversants.

7. Organe de fixation selon l'une ou plusieurs des revendications précédentes, **caractérisé en ce que** le diamètre de ladite tige correspond sensiblement au diamètre desdits trous traversants.

8. Organe de fixation selon l'une ou plusieurs des revendications précédentes, **caractérisé en ce que** lesdits trous traversants ne sont pas taraudés.

9. Organe de fixation selon l'une ou plusieurs des revendications précédentes, **caractérisé en ce que** la distance, entre ladite tête et au moins l'une des bases de ladite première pluralité d'organes à forme tronconique, est légèrement plus petite que l'épaisseur desdits organes à relier.

10. Organe de fixation selon l'une ou plusieurs des revendications précédentes, **caractérisé en ce que** ledit corps allongé est foré de manière monolithique, par moulage par injection de résines de type polyuréthane.

11. Organe de fixation selon l'une ou plusieurs des revendications précédentes, **caractérisé en ce que** ledit corps allongé est fait d'un matériau pratiquement transparent.

12. Organe de fixation selon la revendication 1, **caractérisé en ce que** la distance, entre ladite tête plus large et au moins l'une desdites bases, correspond sensiblement à la somme de l'épaisseur desdits organes à relier.

13. Organe de fixation selon l'une ou plusieurs des revendications précédentes, **caractérisé en ce que** la face exposée de ladite tête plus large permet de fournir des indications, figures, logos et un éventuel symbole ou ornement.

14. Organe de fixation selon la revendication 1, **caractérisé en ce qu'**il comprend un réceptacle (610), formé longitudinalement sur ledit corps mince, ledit réceptacle convenant pour loger un organe d'accouplement ayant une forme allongée, s'étendant à partir d'un premier organe à fixer; ledit réceptacle comprenant une cavité sensiblement cylindrique, ayant une forme sensiblement complémentaire de la forme dudit organe d'accouplement, et une profondeur faisant la longueur de ladite tige et au moins partiellement desdits organes tronconiques.

15. Organe de fixation selon la revendication 14, **caractérisé en ce que** le diamètre de ladite tige correspond sensiblement au diamètre d'au moins un trou traversant, non taraudé et formé dans ledit deuxième organe à fixer; le diamètre de ladite tête étant supérieur, ou égal, au diamètre de ladite tige.
